# EUROPÄISCHE PATENTSCHRIFT

(11) **EP 0 417 500 B1**
(45) Veröffentlichungstag und Bekanntmachung des Hinweises auf die Patenterteilung: **18.11.1993**
(21) Anmeldenummer: 90115766.9
(22) Anmeldetag: 17.08.1990
(51) Int. Cl.: B60K 11/08

(54) **Kühlluftführung im Bugraum eines Kraftfahrzeuges**
Cooling air guide in the front part of an automobile
Conduite d'air de refroidissement dans la partie avant d'un véhicule automobile

(30) Priorität: 09.09.1989 DE 3930076
(43) Veröffentlichungstag der Anmeldung: 20.03.1991
(73) Patentinhaber: MERCEDES-BENZ AG, 70327 Stuttgart (DE)
(72) Erfinder: Boll, Wolf, Dr.-Ing., D-7056 Weinstadt 1 (DE); Steinkämper, Reinhard, Dipl.-Ing., D-7057 Winnenden (DE)

(56) Entgegenhaltungen:
- EP-A- 0 175 114
- DE-A- 3 338 466
- DE-A- 3 702 267
- FR-A- 2 511 330
- FR-A- 2 607 759
- GB-A- 228 110
- GB-A- 2 117 721
- US-A- 1 818 144
- PATENT ABSTRACTS OF JAPAN vol. 9, no. 220 (E-341)(1943) 06 September 1985, & JP-A-60 78827 (MAZDA) 04 Mai 1985,

## Beschreibung

Die Erfindung bezieht sich auf eine Kühlluftführung im Bugraum eines Kraftfahrzeuges nach den im Oberbegriff des Patentanspruchs 1 angegebenen Merkmalen.

Eine derartige Kühlluftfuhrung ist aus der DE-PS 33 38 466 bekannt. Bei dieser bekannten Kühlluftführung sind mehrere Kühler mit unterschiedlicher Funktion in verschiedenen Höhen in unterschiedlicher Tiefe und unterschiedlicher Schräglage im Bugraum des Kraftfahrzeuges angeordnet. Für jeden Kühler ist ein gesondertes Luftführungsgehäuse vorgesehen, eine Kühlluftführung durch ein gemeinsames Gebläse ist nicht möglich.

Der Erfindung liegt die Aufgabe zugrunde, eine Kühlluftführüng zu schaffen, bei der einerseits auch bei sehr beengten Platzverhältnissen im Bugraum eine ausreichende Kühlergröße erreichbar ist und andererseits die Kühlluft auf übliche Art von einem Kühlluftgebläse gefördert wird.

Die Aufgabe ist erfindungsgemäß bei einer Kühlluftführung der eingangs genannten Art durch die kennzeichnenden Merkmale des Patentanspruchs 1 gelöst.

Bei der erfindungsgemäß ausgebildeten Kühlluftführung kann durch die Aufteilung des Kühlers in mehrere Bauteile und deren gestaffelte Anordnung ein Kühler mit ausreichender Querschnittsfläche auch in einem sehr flachen Bugraum untergebracht werden, ohne daß diese Bauteile sich gegenseitig abdecken. Auch genügt ein einziges Kühlluftgebläse für die Kühlluftführung durch alle Bauteile.

Aus der US 18 18 144 ist die Anordnung eines Kühlers in einem Raum oberhalb des Fahrerhauses eines Kraftfahrzeuges bekannt, der aus mehreren zueinander versetzten Bauteilen besteht. Diese überdecken sich lediglich mit ihren Gehäusen. Der Trennung von Luftzu- und -abfuhr dienende Schottwände erstrecken sich senkrecht zur Haupterstreckung der Bauteile, so daß sich durch diese Anordnung kein Gewinn an Kühlfläche ergibt.

Die Ausführung des Patentanspruchs 2 gewährleistet eine gute Aufteilung der durch die Bugwand einströmenden Kühlluft auf die verschiedenen Bauteile des Kühlers.

Bei der Kühlluftführung nach dem Patentanspruch 3 wird der Raum unmittelbar hinter der Bugwand besonders günstig genutzt, indem der Abstand zwischen der Bugwand und dem oberen Bauteil des Kühlers über dessen gesamten Querschnitt gering gehalten werden kann. Dieser Abstand kann durch die Maßnahmen des Patentanspruchs 4 weiter verringert und damit stromab dieses Bauteils weiterer Freiraum gewonnen werden. Dabei wird gemäß dem Patentanspruch 5 trotz einer Schrägausrichtung der Bauteile zu der Hauptströmungsrichtung der Kühlluft eine dadurch bedingte Umlenkung dieser Kühlluft und damit eine Erhöhung des Strömungswiderstandes vermieden.

Im Patentanspruch 6 sind eine günstige Anordnung und Lage des Kondensators für die Klimaanlage angegeben, die eine ausreichende Kühlluftzufuhr zu diesem Kondensator sicherstellen, ohne die Kühlung der Kühlerbauteile wesentlich zu beeinträchtigen.

Die Ausführung des Patentanspruchs 7 schafft die Möglichkeit der Unterbringung weiterer Kühler im Bugraum mit geringem Platzbedarf und ohne erhebliche gegenseitige Beeinträchtigung der Kühlluftströmung.

Mit der Ausführung des Patentanspruchs 8 ist eine Form der Verbrennungsluftführung gefunden, die eine Verringerung des wirksamen Querschnitts des Kühlers, insbesondere in der Breite, vermeidet.

Im folgenden wird die Erfindung anhand eines in der Zeichnung dargestellten Ausführungsbeispiels näher erläutert. Dabei zeigt:
- Fig. 1: einen Bugraum eines Kraftfahrzeuges im Längsschnitt mit darin angeordneten Kühlern,
- Fig. 2: einen der in zwei Bauteilen ausgeführten Kühler in der Ansicht von hinten mit einem Ansaugkanal für die Verbrennungsluft einer das Kraftfahrzeug antreibenden Brennkraftmaschine,
- Fig. 3: einen oberen Bauteil des Kühlers der Fig. 2 in Draufsicht und
- Fig. 4: eine Seitenansicht des Kühlers der Fig. 2 mit dem Ansaugkanal für die Verbrennungsluft.

Der Bugraum 1 eines nicht weiter dargestellten Fahrzeuges, das durch eine nicht dargestellte, hinter dem Bugraum 1 angeordnete Brennkraftmaschine angetrieben wird, ist in Fahrtrichtung 2 nach vorne durch eine Bugwand 3 begrenzt. Die Bugwand 3 besteht im wesentlichen aus einer Kühlermaske 4, einem darunter angeordneten Stoßfänger 5 mit einer diesen tragenden Tragstruktur 6 sowie einer wiederum darunter angeordneten Schürze 7. In der Kühlermaske 4 und der Schürze 7 sind Lufteintrittsöffnungen 8 und 9 vorgesehen für die Zufuhr von Kühlluft in den Bugraum 1.

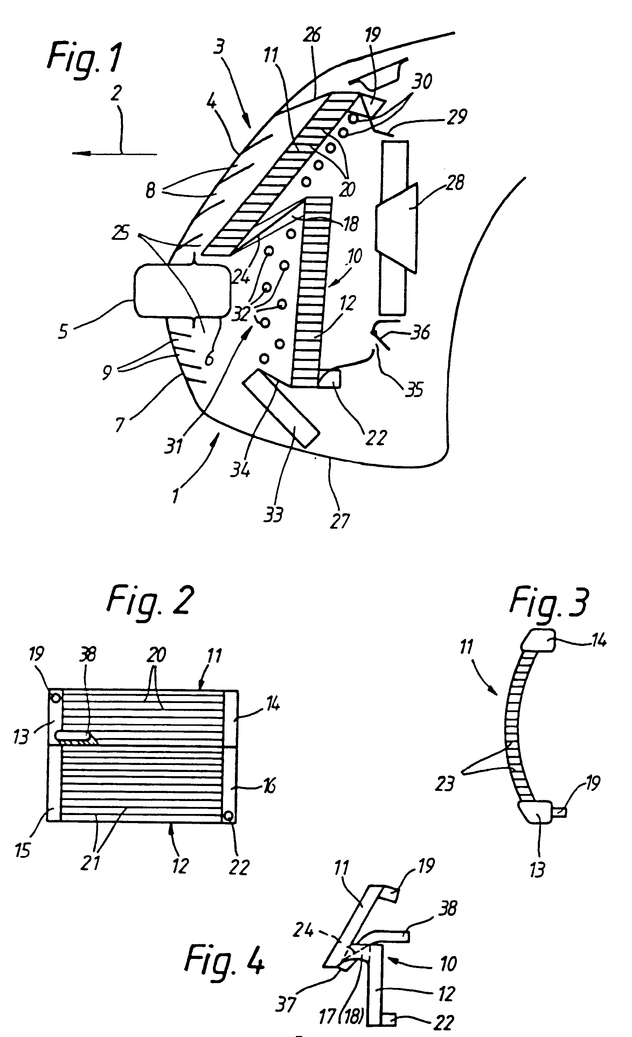

Im Bugraum 1 ist ein Wasserkühler 10 für die Kühlung der Brennkraftmaschine angeordnet, der aus einem oberen Bauteil 11 und einem unteren Bauteil 12 besteht. Die beiden Bauteile 11 und 12 weisen seitlich je zwei Wasserkästen 13 und 14 bzw. 15 und 16 auf (Fig. 2), die im unteren Bereich des oberen Bauteils 11 und im oberen Bereich des unteren Bauteils 12 jeweils durch ein Verbindungsteil 17 und 18 miteinander so in Verbindung stehen, daß Kühlmittel über eine Zulaufleitung 19 in den oberen Bereich des oberen Wasserkastens 13 einströmen, von dort in den unteren Wasserkasten 15, von diesen beiden Wasserkästen 13, 15 über die Wasserrohre 20, 21 der beiden Bauteile 11 und 12 in die Wasserkästen 14, 16 und von diesen in die Rücklaufleitung 22 im unteren Bereich des unteren Wasserkastens 16 weiter strömen kann.

Das obere Bauteil 11 ist im oberen Bereich schräg nach hinten geneigt, so daß es mit geringem Abstand etwa parallel zur Kühlermaske 4 liegt. Seine Unterseite liegt etwas oberhalb der Tragstruktur 6 des Stoßfängers 5. Seine im Querschnitt flachgedrückten Wasserrohre 20 liegen etwa waagerecht, so daß sie etwa parallel zur sie beaufschlagenden Kühlluft verlaufen. Wie aus Fig. 3 zu ersehen ist, ist das obere Bauteil 11, in Draufsicht gesehen, in seinem mittleren Bereich nach vorne gekrümmt und damit der entsprechenden Krümmung der Kühlmaske 4 angepaßt. Seine Kühllamellen 23 sind parallel zueinander und zur Hauptströmungsrichtung der Kühlluft ausgeführt, so daß eine unnötige Umlenkung der Kühlluft stromab des Bauteils 11 vermieden ist.

Das untere Bauteil 12 des Wasserkühlers 10 ist etwa vertikal angeordnet und reicht mit seiner Oberseite bis in den mittleren Bereich des oberen Bauteils 11 mit horizontalem Abstand zu diesem. Der dadurch zwischen den beiden Bauteilen 11,12 gewonnene Raum wird dazu genutzt, daß das obere vordere Bauteil 11 umgehende Kühlluft in Bezug auf seine Haupterstreckung hinter dieses und von dort in das untere hintere Bauteil 12 strömt. Eine von der Unterseite des oberen Bauteils 11 zur Oberseite des unteren Bauteils 12 reichende, in einem spitzen Winkel zur Haupterstreckung jeden Bauteils 11,12 verlaufende Schottwand 24 trennt die Saugseite stromab des oberen Bauteils 11 von der Druckseite stromauf des unteren Bauteils 12, so daß eine Kurzschlußströmung der Kühlluft vermieden wird. Diese gestaffelte Anordnung der beiden Bauteile 11 und 12 nutzt einen Teil der Bauhöhe des Bugraumes 1 mehrfach für die Unterbringung des Wasserkühlers 10, ohne daß die Kühlluft oder ein Teil von ihr zur Kühlung in beiden Bauteilen 11, 12 herangezogen wird. Dabei besteht für beide Bauteile 11, 12 ein gemeinsamer, mögliche Druckunterschiede ausgleichender Kühlluftführungsraum 25 zwischen der Bugwand 3 und den Bauteilen 11, 12 , der weiterhin durch eine obere Schottwand 26 und eine untere Karosseriewand 27 begrenzt ist. Jedoch ist auch eine für jedes Bauteil 11,12 getrennte Luftführung zwischen der Bugwand 3 und den Bauteilen 11,12 möglich. Die Förderung der Kühlluft erfolgt, neben dem Staudruck, durch ein beide Bauteile 11, 12 gemeinsam beaufschlagendes, durch die Brennkraftmaschine angetriebenes Kühlluftgebläse 28, das hinter den beiden Bauteilen 11, 12 in einer beide umfassenden Kühlerzarge 29 liegt. Einem oder beiden Bauteilen 11,12 kann jeweils auch ein insbesondere elektrisch angetriebener Hilfslüfter vorgeordnet werden.

Unmittelbar hinter dem oberen Bauteil 11 des Wasserkühlers ist ein Vorschaltteil 30 eines Kondensators 31 für eine Klimaanlage mit waagerecht liegenden Kältemittelrohren und unmittelbar vor dem unteren Bauteil 12 im Luftführungsraum ein Nachschaltteil 32 des Kondensators 31 mit gleichfalls waagerecht liegenden Kältemittelrohren angeordnet. Diese Aufteilung und Anordnung des Kondensators 31 ergibt neben der Ausnutzung eines freien Raumes die Vorteile, daß trotz einer Anordnung der Kältemittelrohre mit weitem Abstand zueinander diese eine große Kühlfläche darstellen und daß die das obere Bauteil 11 durchströmende Kühlluft überhaupt nicht und die das untere Bauteil 12 durchströmende Kühlluft wegen des in den Nachschaltteil 32 bereits vorgekühlt einströmenden Kältemittels nur wenig im Kondensator 31 vorgewärmt ist.

Unterhalb und schräg vor dem unteren Bauteil 12 ist unmittelbar oberhalb der Karosseriewand 27 ein Ölkühler 33 angeordnet, dem ebenfalls über den Kühlluftführungsraum 25 Kühlluft zugeführt wird. Durch diese gestaffelte Anordnung des Ölkühlers 33 kann dieser eine ausreichende Größe annehmen, ohne daß das untere Bauteil 12 des Wasserkühlers 10 wesentlich in seiner Höhe beschränkt wird. Zwischen dem Ölkühler 33 und dem unteren Bauteil 12 ist eine weitere Schottwand 34 vorgesehen, die einen Kurzschlußstrom zwischen dem Kühlluftführungsraum 25 und der Abströmseite des Ölkühlers 33 verhindert.

Im unteren Bereich der Kühlerzarge 29 ist eine durch eine Klappe 35 verschließbare Öffnung 36 vorgesehen, die bei höheren, einen ausreichenden Staudruck vor der Bugwand 3 erzeugenden Geschwindigkeiten des Kraftfahrzeuges öffnet und somit bei abgeschaltetem Kühlluftgebläse 28 durch einen größeren Abströmguerschnitt ein unmittelbares Abströmen der den Wasserkühler 10 durchströmenden Kühlluft ermöglicht.

Wie aus Fig. 4 zu ersehen, ist auf der Rückseite des oberen Bauteils 11 des Wasserkühlers 10 in Höhe von dessen Unterseite eine von ungekühlter Luft aus dem Kühlluftführungsraum 25 beaufschlagte Öffnung 37 eines Ansaugkanals 38 für die Verbrennungsluft der Brennkraftmaschine vorgesehen. Der Ansaugkanal 38 durchdringt die Schottwand 24 im durch das obere und untere Bauteil 11, 12 gebildeten Spalt zwischen den Verbindungsteilen 17, 18. Auf diese Weise benötigt er keinen gesonderten Raum seitlich des Wasserkühlers 10, ohne dessen Beaufschlagung mit Kühlluft wesentlich zu beeinträchtigen.

## Patentansprüche

1. Kühlluftführung im Bugraum (1) eines Kraftfahrzeuges, der nach vorne durch eine Bugwand (3) mit einer Lufteintrittsöffnung (8) für Kühlluft begrenzt ist und in dem mindestens ein von Kühlluft durchströmter Kühler (10) angeordnet ist, mit einem durch Schottwände (24) begrenzten Kühlluftführungsraum (25) zwischen der Bugwand (3) und dem Kühler (10) sowie mit einem Kühlluftgebläse (28) stromab des Kühlers,
**dadurch gekennzeichnet,**
daß der Kühler (10) in mehrere einzelne Bauteile (11, 12) aufgeteilt ist, die derart zueinander gestaffelt angeordnet sind, daß sie sich mit Abstand zueinander derart in Fahrtrichtung (2) des Kraftfahrzeuges teilweise überdekken, daß der durch die überdeckte Höhe und den Abstand zwischen den Bauteilen (11,12) gebildete Raum der Abfuhr von Kühlluft aus dem vorderen Bauteil (11) und der davon getrennten Zufuhr von Kühlluft zu dem hinteren Bauteil (12) dient, wobei die Trennung (Schottwand 24) schräg zu der Haupterstreckung jeden Bauteils (11,12) liegt, und daß alle Bauteile (11, 12) gemeinsam von dem Kühlluftgebläse (28) beaufschlagt werden.

2. Kühlluftführung nach Anspruch 1,
**dadurch gekennzeichnet,**
daß ein oberes Bauteil (11) oberhalb der Tragstruktur (6) eines in der Bugwand (3) angeordneten Stoßfängers (5) angeordnet ist und im wesentlichen von durch die Bugwand (3) oberhalb des Stoßfängers (5) einströmender Kühlluft beaufschlagt wird und daß ein unteres Bauteil (12) hinter der Tragstruktur (6) angeordnet ist und im wesentlichen von durch die Bugwand (3) unterhalb des Stoßfängers (5) einströmender Kühlluft beaufschlagt wird.

3. Kühlluftführung nach Anspruch 1 oder 2,
**dadurch gekennzeichnet,**
daß ein oberes, mit seiner Unterseite vor einem unteren Bauteil (12) liegendes Bauteil (11) derart schräg nach oben hinten geneigt ist, daß es etwa parallel zum auf gleicher Höhe liegenden Teil der Bugwand (3) liegt.

4. Kühlluftführung nach Anspruch 2 oder 3,
**dadurch gekennzeichnet,**
daß das obere Bauteil (11) in Draufsicht gekrümmt ausgeführt ist mit im wesentlichen gleichbleibendem Abstand zur Bugwand (3).

5. Kühlluftführung nach einem der Ansprüche 1 bis 4,
**dadurch gekennzeichnet,**
daß die Kühlmittelrohre (20, 21) und die Kühllamellen (23) des Kühlers (10) unabhängig von der Ausrichtung oder Biegung seiner Bauteile (11, 12) in der Hauptströmungsrichtung der Kühlluft ausgerichtet sind.

6. Kühlluftführung nach einem der Ansprüche 1 bis 5,
**dadurch gekennzeichnet,**
daß stromab des oberen Bauteils (11) ein Vorschaltteil (30) eines Kondensators (31) einer Klimaanlage und im Kühlluftführungsraum (25) vor dem unteren Bauteil (12) ein Nachschaltteil (32) des Kondensators (31) angeordnet sind.

7. Kühlluftführung nach einem der Ansprüche 1 bis 6,
**dadurch gekennzeichnet,**
daß der Kühler als Wasserkühler (10) für die Brennkraftmaschine des Kraftfahrzeuges ausgebildet ist und daß im Bugraum (1) weitere Kühler wie Öl- oder Ladeluftkühler (33) gestaffelt angeordnet sind mit gemeinsamem Kühlluftführungsraum (25) mit dem Wasserkühler (10).

8. Kühlluftführung nach einem der Ansprüche 1 bis 7,
**dadurch gekennzeichnet,**
daß durch eine die Unterseite des oberen Bauteils (11) mit der Oberseite des unteren Bauteils (12) verbindende Schottwand (24) ein Ansaugkanal (38) für die Verbrennungsluft der Brennkraftmaschine durchgeführt ist.

9. Kühlluftführung nach einem der Ansprüche 1 bis 8,
**dadurch gekennzeichnet,**
daß einem oder jedem Bauteil (11,12) ein insbesondere elektrisch angetriebener Hilfslüfter vorgeschaltet ist.

## Claims

1. Cooling-air ducting system in the front-end space (1) of a motor vehicle, which front-end space is delimited towards the front by a front-end wall (3) having an air inlet opening (8) for cooling air and in which front-end space is arranged at least one cooler (10) through which cooling air flows, having a cooling-air ducting space (25), delimited by partition walls (24), between the front-end wall (3) and the cooler (10) and having a cooling-air fan (28) downstream of the cooler, characterized in that the cooler (10) is divided into a plurality of individual component parts (11, 12) which are arranged staggered relative to one another in such a way that they partially overlap with spacing relative to one another in the driving direction (2) of the motor vehicle, that the space formed by the overlapped height and the spacing between the component parts (11, 12) serves for the removal of cooling air from the forward component part (11) and the separate feeding of cooling air to the rearward component part (12), the separation (partition wall 24) lying obliquely to the principal extension of each component part (11, 12), and that all component parts (11, 12) are acted upon in common by the cooling-air fan (28).

2. Cooling-air ducting system according to Claim 1, characterized in that an upper component part (11) is arranged above the supporting structure (6) of a bumper (5) arranged in the front-end wall (3) and is acted upon essentially by cooling air flowing in throught the front-end wall (3) above the bumper (5) and in that a lower component part (12) is arranged behind the supporting structure (6) and is acted upon essentially by cooling air flowing in through the front-end wall (3) below the bumper (5).

3. Cooling-air ducting system according to Claim 1 or 2, characterized in that an upper component part (11) with its lower side lying in front of a lower component part (12) is inclined obliquely upwards and rearwards in such a way that it lies approximately parallel to that part of the front-end wall (3) which lies at the same level.

4. Cooling-air ducting system according to Claim 2 or 3, characterized in that, in plan view, the upper component part (11) is of curved design with essentially uniform spacing relative to the front-end wall (3).

5. Cooling-air ducting system according to one of Claims 1 to 4, characterized in that the coolant pipes (20, 21) and the cooling fins (23) of the cooler (10) are aligned in the principal direction of flow of the cooling air irrespective of the alignment or curvature of its component parts (11, 12).

6. Cooling-air ducting system according to one of Claims 1 to 5, characterized in that an upstream part (30) of a condenser (31) of an air-conditioning system is arranged downstream of the upper component part (11) and a downstream part (32) of the condenser (31) is arranged in the cooling-air ducting space (25) in front of the lower component part (12).

7. Cooling-air ducting system according to one of Claims 1 to 6, characterized in that the cooler is designed as a radiator (10) for the internal combustion engine of the motor vehicle and that further coolers, such as oil or charge-air coolers (33), are arranged in staggered fashion in the front-end space (1), having a common cooling-air ducting space (25) with the radiator (10).

8. Cooling-air ducting system according to one of Claims 1 to 7, characterized in that an intake duct (38) for the combustion air of the internal combustion engine is passed through a partition wall (24) connecting the lower side of the upper component part (11) to the upper side of the lower component part (12).

9. Cooling-air ducting system according to one of Claims 1 to 8, characterized in that an auxilliary fan, in particular an electrically driven auxilliary fan, is arranged upstream of one or each component part (11, 12).

## Revendications

1. Conduite d'air de refroidissement dans la partie avant (1) d'un véhicule automobile, qui est limitée à l'avant par une paroi (3) avec une ouverture d'entrée d'air (8) pour l'air de refroidissement et qui est montée dans au moins un radiateur (10) traversé par l'air de refroidissement, avec une chambre de conduite d'air de refroidissement (25), limitée par des cloisons étanches (24), entre la paroi avant (3) et le radiateur (10), ainsi qu'avec un ventilateur d'air de refroidissement (28), en aval du radiateur, caractérisée en ce que le radiateur (10) est partagé en plusieurs composants (11, 12) individuels, qui sont montés échelonnés les uns par rapport aux autres, de manière qu'espacés les uns des autres, ils se recouvrent en partie dans le sens de la marche (2) du véhicule, que le volume formé par la hauteur de recouvrement et l'espacement entre les composants (11, 12), serve à évacuer l'air de refroidissement du composant (11) avant et à alimenter séparément en air de refroidissement le composant arrière (12), la séparation (cloison étanche 24) s'étendant obliquement par rapport à l'extension principale de chaque composant (11, 12) et en ce que tous les composants (11, 12) sont alimentés en commun par le ventilateur d'air de refroidissement (28).

2. Conduite d'air de refroidissement selon la revendication 1, caractérisée en ce qu'un composant supérieur (11) est monté au-dessus de la structure portante (6) d'un pare-chocs (5), monté dans la paroi avant (3), et est essentiellement alimenté par l'air de refroidissement arrivant par la paroi avant (3), au-dessus du pare-chocs (5), et en ce qu'un composant inférieur (12) est monté derrière la structure portante (6) et est alimenté essentiellement par l'air de refroidissement arrivant par la paroi avant (3), au-dessous du pare-chocs (5).

3. Conduite d'air de refroidissement selon les revendications 1 ou 2, caractérisée en ce qu'un composant (11) supérieur, dont la face inférieure se trouve devant un composant inférieur (12), est incliné obliquement vers le haut, à l'arrière, de manière qu'il soit à peu près parallèle à la partie de la paroi avant (3), se trouvant à même hauteur.

4. Conduite d'air de refroidissement selon la revendication 2 ou 3, caractérisée en ce que le composant supérieur (11), vu de dessus, est courbé, avec une distance à peu près constante par rapport à la paroi avant (3).

5. Conduite d'air de refroidissement selon l'une des revendications 1 à 4, caractérisée en ce que les tubes centraux de refroidissement (20, 21) et les lamelles de refroidissement (23) du radiateur (10) sont orientés indépendamment de l'orientation ou de la flexion de ses composants (11, 12), dans la direction principale d'écoulement de l'air de refroidissement.

6. Conduite d'air de refroidissement selon l'une des revendications 1 à 5, caractérisée en ce qu'en aval du composant supérieur (11), il est monté une pièce de tête (30) d'un condensateur (31) d'une installation de climatisation et, dans la chambre de conduite d'air de refroidissement (25), devant le composant inférieur (12), une pièce arrière (32) du condensateur (31).

7. Conduite d'air de refroidissement selon l'une des revendications 1 à 6, caractérisée en ce que le radiateur est conçu comme un radiateur à eau (10) pour le moteur à combustion interne du véhicule automobile et en ce que dans la partie avant (1) sont montés, échelonnés, d'autres radiateurs tels que des radiateurs à huile ou à air de charge (33) avec chambre de conduite d'air de refroidissement (25) commune avec le radiateur à eau (10).

8. Conduite d'air de refroidissement selon l'une des revendications 1 à 7, caractérisée en ce qu'un canal d'aspiration (38) pour l'air de combustion du moteur à combustion interne traverse la cloison (24), reliant la face inférieure du composant supérieur (11) à la face supérieure du composant inférieur (12).

9. Conduite d'air de refroidissement selon l'une des revendications 1 à 8, caractérisée en ce qu'un ventilateur auxiliaire, en particulier entraîné électriquement, est monté en amont d'un ou de chaque composant (11, 12).
